# EUROPEAN PATENT APPLICATION

(11) **EP 4 219 416 A1**
(43) Date of publication of application: **02.08.2023**
(21) Application number: 21872612.3
(22) Date of filing: 27.09.2021
(51) Int. Cl.: C03B 8/04, C03B 20/00, F27D 7/06, C03B 37/014

(54) **METHOD FOR MANUFACTURING FLUORINE-CONTAINING SILICA GLASS**

(30) Priority: 28.09.2020 JP 2020162359
(71) Applicant: SUMITOMO ELECTRIC INDUSTRIES, LTD., Osaka-shi, Osaka 541-0041 (JP)
(72) Inventor: HARUNA, Tetsuya, Osaka-shi, Osaka 541-0041 (JP); ISHIKAWA, Shinji, Osaka-shi, Osaka 541-0041 (JP); MORITA, Keisei, Osaka-shi, Osaka 541-0041 (JP); HASEGAWA, Tatsuro, Osaka-shi, Osaka 541-0041 (JP); ARAKAWA, Seiji, Osaka-shi, Osaka 541-0041 (JP)
(74) Representative: TBK
(86) International application number: PCT/JP2021/035386
(87) International publication number: WO 2022/065486

(57) **Abstract**

A method for manufacturing fluorine-containing silica glass comprising: a degassing step of inserting a porous silica glass body into a furnace core tube installed in an airtight container and then vacuum degassing the inside of the furnace core tube while heating; a supply step of supplying a fluorine compound gas into the furnace core tube under reduced pressure; a fluorine addition step of heat-treating the porous silica glass body under reduced pressure while supplying the fluorine compound gas into the furnace core tube and discharging the gas from the furnace core tube; and a transparent vitrification step of heating in a reduced pressure atmosphere at a temperature higher than the temperature of the degassing step and the fluorine addition step.

## Description

### TECHNICAL FIELD

The present disclosure relates to a method for producing a fluorine-containing silica glass. The present application claims priority from Japanese Patent Application No. 2020-162359 filed on September 28, 2020, and contents of which are incorporated by reference in its entirety.

### BACKGROUND ART

Patent Literatures 1 to 3 disclose methods for adding fluorine to a glass preform by exposing the glass preform to an atmosphere containing a fluorine compound gas and an inert gas such as He, and then consolidating the glass preform to make the glass preform transparent. As disclosed in Patent Literature 3, in such a method for producing fluorine-containing silica glass in related art, each step is performed by setting pressure in a production apparatus to 1 atm or more.

Patent Literature 4 discloses that a dehydration reaction of a glass fine particle aggregate is promoted by exposing the glass fine particle aggregate to an inert gas atmosphere containing halogen in a heating furnace that can be depressurized to 0.1 torr or less. Patent Literature 5 discloses a method for making a glass preform transparent by heating the glass preform while blowing a halogen gas such as chlorine under reduced pressure. Patent Literature 6 describes a method for producing transparent glass, including a step of removing OH contained in a glass fine particle deposit by supplying a CO-containing gas in a heating furnace that can degases under vacuum, and then removing CO on a surface of the glass fine particle deposit under reduced pressure.

### CITATION LIST

### PATENT LITERATURE

Patent Literature 1: JPS60-90842A
Patent Literature 2: JPS62-153130A
Patent Literature 3: JPS61-247633A
Patent Literature 4: JPS56-63833A
Patent Literature 5: JPH01-275441A
Patent Literature 6: JP2008 -50202A

### SUMMARY OF INVENTION

A method for producing a fluorine-containing silica glass according to one aspect of the present disclosure including:
a degasification step of degassing an inside of a furnace core tube under reduced pressure while heating the inside of the furnace core tube, after inserting a porous silica glass body into the furnace core tube provided in an airtight container;
a supply step of supplying a fluorine compound gas into the furnace core tube under reduced pressure;
a fluorine addition step of heat-treating the porous silica glass body under reduced pressure while supplying the fluorine compound gas into the furnace core tube and discharging a gas from the furnace core tube; and
a transparent vitrification step of heat-treating in a reduced pressure at a temperature higher than temperatures in the degasification step and the fluorine addition step.

### BRIEF DESCRIPTION OF DRAWINGS

[FIG. 1] FIG. 1 is a schematic view showing an example of a production apparatus of a fluorine-containing silica glass;
[FIG. 2] FIG. 2 is a graph showing a relative refractive index difference in a fluorine-containing silica glass produced in Production Example 1;
[FIG. 3] FIG. 3 is a graph showing a relative refractive index difference in a fluorine-containing silica glass produced in Production Example 2;
[FIG. 4] FIG. 4 is a graph showing a relative refractive index difference in a fluorine-containing silica glass produced in Production Example 3;
[FIG. 5] FIG. 5 is a graph showing a relative refractive index difference in a fluorine-containing silica glass produced in Production Example 4;
[FIG. 6] FIG. 6 is a graph showing a relative refractive index difference in a fluorine-containing silica glass produced in Production Example 5; and
[FIG. 7] FIG. 7 is a graph showing a relationship between a partial pressure of a fluorine compound gas in a supply step and a relative refractive index difference of an obtained fluorine-containing silica glass.

### DESCRIPTION OF EMBODIMENTS

### [Technical Problem]

In the methods disclosed in Patent Literatures 1 to 3, as a size of a porous silica glass body (glass preform) increases, a time required for adding fluorine increases, and usage amounts of the fluorine compound gas and the inert gas also greatly increase. In particular, when He is used as the inert gas, an increase in production cost due to the increase in usage amount of the inert gas causes a serious problem.

As in the methods disclosed in Patent Literatures 4 to 6, when the dehydration reaction or transparent vitrification is performed in a vacuum container, a usage amount of the inert gas or the like in steps can be reduced. However, Patent Literatures 4 to 6 do not disclose a technique of adding fluorine to a porous silica glass body in the vacuum container, and do not disclose, for example, a condition for preventing deterioration of the vacuum container due to a fluorine compound and stably using the vacuum container over a long period of time.

An object of the present disclosure is to produce a fluorine-containing silica glass with high productivity while preventing deterioration of a container used for production and reducing a usage amount of an inert gas.

### [Advantageous Effects of Present Disclosure]

According to a configuration of the disclosure, a fluorine-containing silica glass can be produced with high productivity while preventing deterioration of a container used for production and reducing a usage amount of an inert gas.

### [Description of Embodiments of Present Disclosure]

First, embodiments of the present disclosure will be listed and described.

A method for producing a fluorine-containing silica glass including:
a degasification step of degassing an inside of a furnace core tube under reduced pressure while heating the inside of the furnace core tube, after inserting a porous silica glass body into the furnace core tube provided in an airtight container;
a supply step of supplying a fluorine compound gas into the furnace core tube under reduced pressure;
a fluorine addition step of heat-treating the porous silica glass body under reduced pressure while supplying the fluorine compound gas into the furnace core tube and discharging a gas from the furnace core tube; and
a transparent vitrification step of heat-treating in a reduced pressure at a temperature higher than temperatures in the degasification step and the fluorine addition step.

According to this configuration, a fluorine-containing silica glass can be produced with high productivity while preventing deterioration of a container used for production and reducing a usage amount of an inert gas. Specifically, since moisture and an OH group in the porous silica glass body that reacts with the fluorine compound gas to generate an HF gas are desorbed in the degasification step before the supply step and the fluorine addition step, the deterioration of the container can be prevented. Since the fluorine compound gas easily permeates into an inside of the porous silica glass body under reduced pressure, an addition rate of the fluorine compound is improved, and productivity is increased. Further, since each of the above steps is performed under reduced pressure, the inert gas may not be used, and even when the inert gas is used, the usage amount thereof can be reduced.

The term "under reduced pressure" refers to a state in which a pressure in the furnace core tube is lower than an atmospheric pressure. The temperatures of the degasification step and the fluorine addition step indicate a temperature of a surface of the furnace core tube in each step.

The production method, in which
the degasification step is preferably performed at a temperature of 600°C or more and 1200°C or less.

According to this configuration, since the degasification step is performed at a temperature of 600°C or more, it is possible to further promote the desorption of the OH group present as a silanol group. Since the degasification step is performed at a temperature of 1200°C or less, a situation in which sintering of the porous silica glass body proceeds to increase density hardly occurs. As a result, it is possible to prevent a situation in which the fluorine compound gas hardly penetrates into the porous silica glass body in the fluorine addition step.

The production method, in which
a maximum temperature in the degasification step is preferably 900°C or more and 1200°C or less.

According to this configuration, a desorption reaction of the moisture and the OH group proceeds faster as the temperature is higher, and thus the moisture and the OH group in the porous silica glass body can be efficiently desorbed.

The production method, in which
the degasification step preferably has a heating time of at least 30 minutes at the maximum temperature.

According to this configuration, the moisture and the OH group in the porous silica glass body can be more efficiently desorbed.

The production method, in which
an ultimate pressure at an end of the degasification step is preferably less than 500 Pascals.

According to this configuration, since the degasification step is performed under a sufficiently low pressure, the moisture and the OH group in the porous silica glass body can be more efficiently desorbed.

Here, the pressure indicates a pressure in the furnace core tube.

The production method, in which
in the degasification step, an inert gas may be supplied into the furnace core tube.

According to this configuration, an impurity such as moisture desorbed from the porous silica glass body can be efficiently exhausted to an outside of the furnace core tube.

The production method, in which
the fluorine compound gas used in the supply step and the fluorine addition step is a compound gas of a group 14 element and fluorine, and preferably contains neither a chlorine atom nor a hydrogen atom.

According to this configuration, it is possible to further reduce corrosion of a metal component of the container when the fluorine compound gas leaks out of the furnace core tube.

The production method, in which
in the supply step and the fluorine addition step, the fluorine compound gas is diluted with an inert gas at a concentration of 1% or more and less than 100% and supplied, or the fluorine compound gas may be supplied at a concentration of 100%.

According to this configuration, a pressure in the furnace core tube can be easily controlled by adjusting the concentration of the fluorine compound gas.

The production method, in which
in the supply step, the heat-treating is preferably performed after stopping exhaustion of the furnace core tube.

According to this configuration, the fluorine compound gas can be efficiently permeated into the porous silica glass body, and a yield of fluorine compound gas can be improved.

The production method, in which
in the fluorine addition step, at least one of an amount of the supplied gas and an amount of the exhausted gas is preferably controlled such that a pressure in the furnace core tube is constant.

According to this configuration, a concentration of the fluorine compound gas in a furnace core tube 20 can be maintained at a desired concentration, for example, a high concentration. Therefore, it is possible to add fluorine more efficiently than the case in which the heat-treating is performed in a state in which the exhaust of the fluorine compound gas is stopped in the fluorine addition step, and it is possible to shorten a time required for the fluorine addition step.

The production method further preferably including:
a confinement and heat-treating step of heat-treating in a state in which the supply to the furnace core tube and the discharge from the furnace core tube is stopped and the fluorine compound gas is confined in the furnace core tube, after the fluorine adding step.

According to this configuration, the fluorine compound gas can be efficiently permeated into the porous silica glass body, and a yield of fluorine compound gas can be improved. This also leads to prevention of desorption of fluorine added to an outside of the porous silica glass body during transparent vitrification.

The production method, in which
a maximum temperature of the confinement and heat-treating step is preferably 1150°C or more and 1250°C or less.

According to this configuration, it is possible to improve efficiency of fluorine addition in the confinement and heat-treating step and to shorten the time required for the confinement and heat-treating step.

A temperature of the confinement and heat-treating step indicates the temperature of the surface of the furnace core tube in this step.

The production method further preferably including:
an evacuating step of reducing a pressure while supplying an inert gas into the furnace core tube before the transparent vitrification step.

According to this configuration, the fluorine compound gas remaining in the furnace core tube or the container can be efficiently exhausted, and adsorption of an impurity into the furnace core tube or the container can be prevented.

The production method, in which
an ultimate pressure is preferably less than 500 Pascals at an end of the transparent vitrification step.

According to this configuration, residual bubbles in the fluorine-containing silica glass obtained by the transparent vitrification can be reduced.

### [Details of Embodiments of Present Disclosure]

Hereinafter, examples of embodiments of a method for producing a fluorine-containing silica glass according to the present disclosure will be described with reference to the drawings. In this specification, directions such as an upper side and a lower side may be mentioned, but these directions are relative directions set for convenience of description.

### (Production Apparatus of Fluorine-containing Silica Glass)

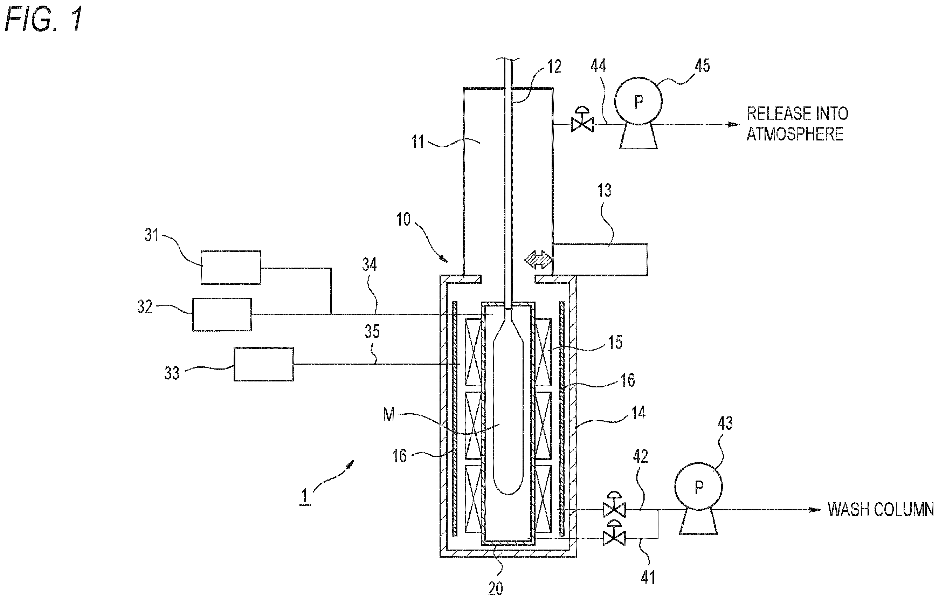

FIG. 1 is a schematic view showing an example of a production apparatus of a fluorine-containing silica glass. A production apparatus 1 illustrated in FIG. 1 includes a container 10, a furnace core tube 20, a fluorine compound gas supply portion 31, inert gas supply portions 32 and 33, supply pipes 34 and 35, exhaust pipes 41, 42, and 44, and pumps 43 and 45.

The container 10 is an airtight container. The container 10 includes a front chamber 11, a rod 12, a gate valve 13, a furnace body 14, a heater 15, and a heat insulating material 16. The furnace core tube 20 is disposed inside the furnace body 14.

An insertion hole through which the rod 12 is inserted is provided in an upper end of the front chamber 11. The rod 12 is inserted into the front chamber 11 through the insertion hole. An upper lid of the furnace core tube 20 is engaged with a lower end of the rod 12, and a porous silica glass body M is held further below the upper lid. The rod 12 is connected to a lifting device (not shown), and can be lifted and lowered on a central axis of the furnace core tube 20, for example.

The front chamber 11 and the furnace body 14 are made of a metal such as SUS (steel use stainless). When the production apparatus 1 is not in use, an opening between the front chamber 11 and the furnace body 14 is closed by the gate valve 13. When the production apparatus 1 is used, the gate valve 13 is opened, and the opening is formed between the front chamber 11 and the furnace body 14. Further, the porous silica glass body M held by the rod 12 in the front chamber 11 is lowered and inserted into the furnace core tube 20 in the furnace body 14.

The heater 15 is disposed around the furnace core tube 20. The heater 15 is, for example, a resistance heating type heater. The heat insulating material 16 is disposed between the heater 15 and the furnace body 14.

The furnace core tube 20 has an opening on an upper side thereof. This opening is closed by the upper lid engaged with the rod 12 when the porous silica glass body M is inserted into the furnace core tube 20. The furnace core tube 20 is in an airtight state when the opening of the furnace core tube 20 is closed by the upper lid. The furnace core tube 20 is preferably made of carbon, for example, from the viewpoint of preventing deformation during high-temperature heating. In order to improve airtightness of the furnace core tube 20, it is also preferable to apply an airtight coating (for example, pyrolytic carbon, glassy carbon, silicon carbide, or silicon nitride) to a material surface of the furnace core tube 20.

The fluorine compound gas supply portion 31 supplies a fluorine compound gas into the furnace core tube 20 via the supply pipe 34. The inert gas supply portion 32 supplies an inert gas into the furnace core tube 20 via the supply pipe 34. The inert gas supply portion 33 supplies the inert gas into the furnace body 14 via the supply pipe 35. By controlling a gas supply amount from the fluorine compound gas supply portion 31 and the inert gas supply portions 32 and 33, it is possible to control a pressure in the furnace core tube 20 and to promote exhaust of unnecessary components and the like to the exhaust pipes 41 and 42. In order to control the gas supply amount, for example, an opening and closing valve or a MFC (mass flow controller) may be provided in each of the supply pipes 34 and 35.

The exhaust pipe 41 is a pipe for exhausting an inside of the furnace core tube 20. The exhaust pipe 42 is a pipe for exhausting an inside of the furnace body 14. The exhaust pipes 41 and 42 are provided with the opening and closing valves, respectively. The exhaustion in the furnace body 14 and the furnace core tube 20 is controlled by these opening and closing valves.

The exhaust pipes 41 and 42 join downstream. A pump 43 that exhausts and depressurize the inside of the furnace body 14 and the inside of the furnace core tube 20 is provided in a pipe downstream of a junction point of the exhaust pipes 41 and 42. The pump 43 is, for example, a rotary pump. Further, a trap portion that traps dust contained in exhaust gas from the furnace body 14 or the furnace core tube 20 or a booster pump that increases a suction power of the pump 43 may be provided downstream of the junction point and upstream of the pump 43.

When the fluorine compound gas is contained in the exhaust gas, the exhaust gas is sent to a wash column. Although not shown, when the fluorine compound gas is not contained in the exhaust gas, the exhaust gas may be released into the atmosphere. A destination of the exhaust gas may be controlled by providing one or more opening and closing valves downstream of the pump 43. The pump 45 exhausts air from the front chamber 11 via the exhaust pipe 44. An exhaust gas from the front chamber 11 is released into the atmosphere.

In the production apparatus 1, the furnace core tube 20 has airtightness, but it is difficult to make the furnace core tube 20 completely airtight, and thus a part of a gas supplied into the furnace core tube 20 may flow into the furnace body 14.

### (Method for Producing Fluorine-containing Silica Glass)

Hereinafter, a method for producing the fluorine-containing silica glass according to the present embodiment will be described. In the production method according to the present embodiment, the fluorine-containing silica glass is produced using the production apparatus 1.

The method for producing the fluorine-containing silica glass according to the present embodiment including:
(1) a degasification step of degassing the inside of the furnace core tube 20 under reduced pressure while heating the inside of the furnace core tube 20, after inserting the porous silica glass body M into the furnace core tube 20 provided in the airtight container 10;
(2) a supply step of supplying the fluorine compound gas into the furnace core tube 20 under reduced pressure;
(3) a fluorine addition step of heat-treating the porous silica glass body M while supplying the fluorine compound gas into the furnace core tube 20 and discharging a gas from the furnace core tube 20; and
(4) a transparent vitrification step of heat-treating in a reduced pressure at a temperature higher than temperatures in the degasification step and the fluorine addition step.

The porous silica glass body M can be produced, for example, by a known method such as a VAD (vapor-phase axial deposition) method or an OVD (outside vapor deposition) method. The porous silica glass body M has a structure in which, for example, glass fine particles each having a particle diameter of 0.1 µm to 1 µm generated by a flame hydrolysis reaction of a silicon compound gas (SiCl₄, siloxane, or the like) are deposited on a predetermined target, and is generally also referred to as soot. The porous silica glass body M contains moisture as adsorbed water or a silanol group. When the moisture and the fluorine compound gas react with each other, an HF gas is generated. When the HF gas leaks out of the furnace core tube 20, the HF gas may cause corrosion of a metal component in the furnace body 14. Since a vapor pressure of metal fluoride generated by the corrosion is sufficiently low and a boiling point is 1000°C or more, it is desirable to prevent the generation of the HF gas from the viewpoint of preventing deterioration of the furnace body 14 or the like, although contamination into the product is small.

Therefore, in the production method according to the present embodiment, before the fluorine adding step, the addition step of degassing the inside of the furnace core tube 20 under reduced pressure while heating the inside of the furnace core tube 20 is performed. In the degasification step, the moisture in the porous silica glass body M is desorbed by heat.

A desorption reaction of the adsorbed water is promoted at 200°C or more, and the desorption of the OH group in the silanol group is promoted at 600°C or more. The desorption reaction proceeds faster as the temperature increases. Therefore, the degasification step is preferably performed at 600°C or more, and a maximum temperature is preferably 900°C or more. When the temperature in the degasification step is lower than 600°C, the desorption of the moisture does not proceed sufficiently, and as a result, there is a possibility that a transmission loss increases when the fluorine-containing silica glass is used as an optical fiber. From the viewpoint of sufficiently promoting the desorption of the moisture to further prevent the transmission loss, a heating time is preferably 30 minutes or more at the maximum temperature. On the other hand, when a temperature of the porous silica glass body M exceeds 1200°C, sintering proceeds and density increases. As a result, the fluorine compound gas is less likely to permeate into the porous silica glass body M in the fluorine addition step. Accordingly, the degasification step is preferably performed at 1200°C or less.

The degasification step is also performed under reduced pressure to increase desorption efficiency. From the viewpoint of further improving the desorption efficiency, an ultimate pressure at an end of the degasification step is preferably less than 500 Pascals, more preferably less than 200 Pascals, and still more preferably less than 100 Pascals.

From the viewpoint of efficiently exhausting an impurity such as moisture desorbed in the degasification step to an outside of the furnace core tube 20 and preventing re-adhesion of the moisture or the like to the porous silica glass body M, the degasification step may be performed while supplying the inert gas into the furnace core tube 20. Here, the inert gas is not particularly limited, and a N₂ gas, an Ar gas, a He gas, or the like may be used. Among these, from the viewpoint of reducing a production cost, it is preferable to use the N₂ gas. The same applies to the inert gas used in other steps.

The supply step is a step of starting the supply of the fluorine compound gas into the furnace core tube 20 under reduced pressure. From the viewpoint of efficiently promoting the reaction between the fluorine compound gas and the porous silica glass body M, the supply step is preferably performed while the exhaust from the furnace core tube 20 is stopped.

In the fluorine addition step, the gas is discharged from the furnace core tube 20 while the fluorine compound gas is continuously supplied into the furnace core tube 20. By performing the fluorine addition step under reduced pressure, a sufficient amount of the fluorine compound gas can be efficiently reacted with the porous silica glass body M.

In the fluorine addition step, at least one of an amount of the supplied gas and an amount of the exhausted gas is preferably controlled such that the pressure in the furnace core tube 20 is constant. By performing such control, a concentration of the fluorine compound gas in the furnace core tube 20 can be maintained at a desired concentration, for example, a high concentration. Therefore, for example, it is possible to add fluorine more efficiently than the case in which the heat-treating is performed in a state in which exhaustion of the fluorine compound gas is stopped in the fluorine addition step, and it is possible to shorten a time required for the fluorine addition step.

The fluorine compound gas used in the supply step and the fluorine addition step is not particularly limited, but a compound gas of a group 14 element and fluorine is preferable, and specifically, a CF₄ gas and a SiF₄ gas are preferable. These gases tend to be stable and difficult to decompose even at a high temperature. For example, a dissociation rate of each of the CF₄ gas and the SiF₄ gas is calculated to be 1 ppm or less even at 1500°C. Therefore, even if the gas leaks out of the furnace core tube 20, there is a little possibility of corroding the metal component in the furnace body 14.

Since CF₄ is less likely to react with trace moisture, it is superior to SiF₄ in terms of stability. On the other hand, CF₄ generates COz as a by-product of a reaction of adding fluorine to SiOz. Since the generated COz easily reacts with a carbon material constituting the furnace core tube 20 at a high temperature of 1100°C or more, SiF₄ is preferable from the viewpoint of preventing deterioration of the furnace core tube 20. Although a SF₆ gas may be used, the SF₆ gas is inferior to the CF₄ gas and the SiF₄ gas from the viewpoint of long-term stable use because corrosion of a metal part is likely to occur when a SOx gas generated by a reaction of the SF₆ gas and SiOz becomes H₂SO₄.

The fluorine compound gas preferably contains neither a chlorine atom nor a hydrogen atom. This is because if the gas containing the chlorine atom or the hydrogen atom leaks out of the furnace core tube 20 and reacts with the metal component in the furnace body 14, and a metal impurity desorbed from the metal component enter the furnace core tube 20, characteristics of the optical fiber obtained from a product, that is, the fluorine-containing silica glass may be adversely affected. In particular, even if a transition metal impurity is contained at 1 ppb, a loss characteristic of the optical fiber is significantly deteriorated. A representative example of an element that may react with the metal component to form a metal impurity having a high vapor pressure is chlorine. In particular, since iron III chloride (FeCl₃) has a boiling point of an order of 300°C and a high vapor pressure, the iron III chloride is one of components that are easily mixed into the product. Since the fluorine compound gas (CCl₂F₂ or the like) containing the chlorine atom is relatively easily decomposed and easily forms a Clz gas, corrosion easily occurs in the furnace body 14. The fluorine compound gases used in the supply step and the fluorine addition step may be different, but are preferably the same.

As shown in Patent Literature 3, an amount of fluorine added to the porous silica glass body M has a property of being proportional to 1/4 powers of a partial pressure of the fluorine compound gas during a heat-treating. In the supply step and the fluorine addition step, when the fluorine compound gas is supplied under reduced pressure, since the partial pressure of the fluorine compound gas can be controlled by the pressure in the furnace core tube 20, the addition amount can be controlled even when the fluorine compound gas has a concentration of 100%. However, an easily controllable pressure range may vary depending on a structure of the furnace core tube 20, and a mixed gas in which the inert gas is mixed with the fluorine compound gas may be used for adjustment thereof. In this case, for example, it is preferable to dilute the fluorine compound gas with the inert gas at a concentration (volume concentration) of 1% or more and less than 100%. By controlling a concentration ratio of a flow rate of the fluorine compound gas to a flow rate of the inert gas, a concentration of fluorine added to the porous silica glass body M can be adjusted to a desired concentration. Since the fluorine compound gas easily permeates into an inside of the porous silica glass body M under reduced pressure, a addition rate of the fluorine compound can be improved without considering inter diffusion as in a case of supplying the mixed gas at normal pressure.

By performing the transparent vitrification step under reduced pressure, residual bubbles in the product can be prevented even when the porous silica glass body M is large. From the viewpoint of preventing the residual bubbles, an ultimate pressure at an end of the transparent vitrification step is preferably less than 500 Pascals, more preferably less than 200 Pascals, and still more preferably less than 100 Pascals. By reducing the residual bubbles, it is possible to reduce a decrease in yield caused by an occurrence of a diameter variation due to the residual bubbles when a fiber is formed in a drawing step which is a subsequent production step. An annealing step or the like for removing the residual bubbles is not required before the drawing step.

The temperature in the transparent vitrification step is not particularly limited as long as the temperature is higher than the temperatures in the degasification step and the fluorine addition step, and is preferably 1250°C or more, more preferably 1300°C or more, and still more preferably 1320°C or more from the viewpoint of sufficiently sintering the porous silica glass body M in a short time.

In the transparent vitrification step, the supply of the fluorine compound gas may be continued or stopped. When the fluorine compound gas flows, there is an advantage that an amount of fluorine added to an outer peripheral portion of a porous body serving as a cladding portion of the optical fiber is increased, but the furnace core tube 20 and the like are easily damaged.

The transparent fluorine-containing silica glass and the fluorine compound gas remaining in the furnace core tube 20 can be exhausted to an outside of a reaction system by subjecting the furnace core tube 20 to vacuum processing (exhausting by the pump 43), and at this time, if the final ultimate pressure can be maintained in a low state, the residual bubbles in the transparent fluorine-containing silica glass can be reduced. By exhausting the fluorine compound gas while supplying the inert gas, it is possible to efficiently desorb an adsorbed component in the reaction system and prevent the damage to the furnace core tube 20.

When the fluorine compound gas is not present around the porous silica glass body M at the time of the transparent vitrification, fluorine added to an outside of the porous silica glass body M is desorbed, and a refractive index of the portion is increased. However, when the fluorine-containing silica glass is used for the optical fiber, even if a refractive index of the outer peripheral portion of the cladding is slightly increased, an influence on an optical transmission characteristic is small.

As a method for preventing the desorption of fluorine on an outer side, after at least one of the amount of the supplied gas and the amount of the exhausted gas is controlled such that the pressure in the furnace core tube 20 is constant in the fluorine addition step before the transparent vitrification, a confinement and heat-treating step may be additionally performed in which a supply side and an exhaust side are closed again, and the fluorine compound gas is confined in the furnace core tube 20 and a heat-treating is performed. The confinement and heat-treating step is preferably performed such that the maximum temperature is 1150°C to 1250°C. Before the transparent vitrification step, an evacuating step of reducing a pressure while supplying the inert gas into the furnace core tube 20 may be additionally performed.

### [Examples]

Hereinafter, the present disclosure will be described in more detail by showing Production Examples 1 to 5 as Examples according to the present disclosure. The present disclosure is not limited to the following Examples.

### (Production Example 1)

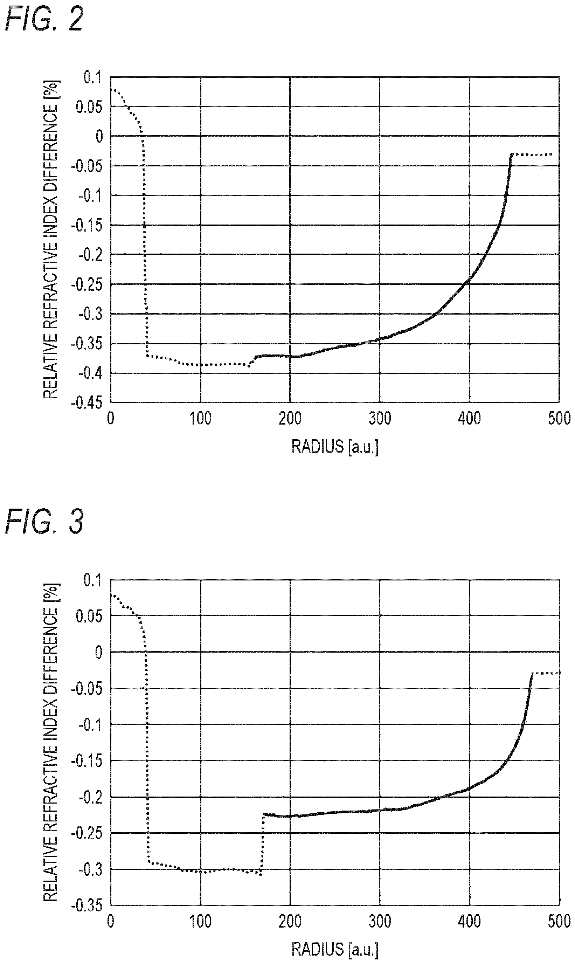

A fluorine-containing silica glass was produced using the production apparatus 1 under conditions shown in the following Table 1. Temperatures and pressures shown in Table 1 are temperatures of a surface of the furnace core tube 20 and pressures in the furnace core tube 20. A relative refractive index difference of a transparent silica glass produced in Production Example 1 is shown in FIG. 2. A solid line portion in FIG. 2 is a portion produced in the present production example. As shown in FIG. 2, the transparent silica glass obtained in Production Example 1 contained fluorine sufficiently. A transmission loss (measured at 1550 nm) of an optical fiber obtained by drawing the transparent silica glass as a preform was 0.168 dB/km.

### (Production Example 2)

A fluorine-containing silica glass was produced under the conditions shown in Table 1. A relative refractive index difference of a transparent silica glass produced in Production Example 2 is shown in FIG. 3. A solid line portion in FIG. 3 is a portion produced in the present production example. As shown in FIG. 3, the transparent silica glass obtained in Production Example 2 contained fluorine sufficiently. A transmission loss (measured at 1550 nm) of an optical fiber obtained by drawing the transparent silica glass as a preform was 0.162 dB/km.

### (Production Example 3)

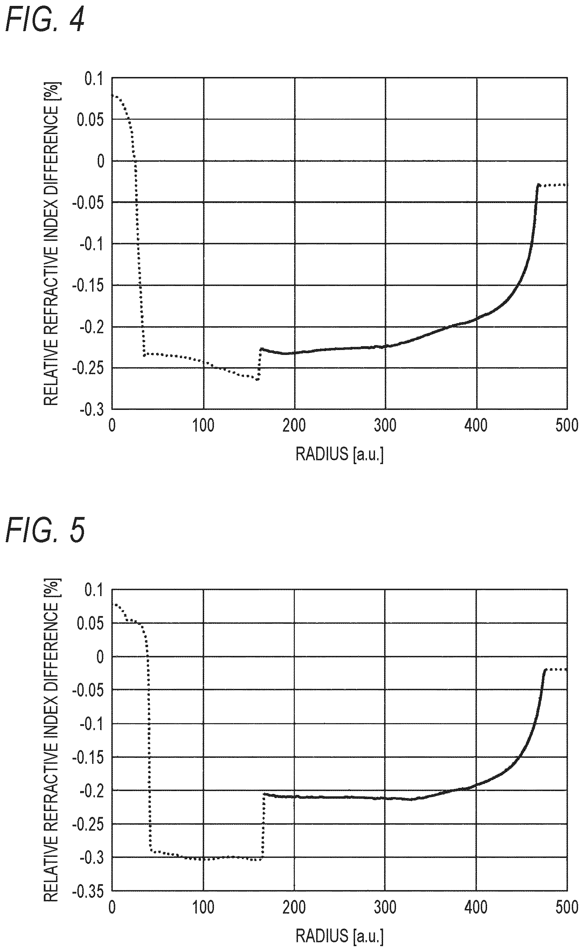

A fluorine-containing silica glass was produced under the conditions shown in Table 1. A relative refractive index difference of a transparent silica glass produced in Production Example 3 is shown in FIG. 4. A solid line portion in FIG. 4 is a portion produced in the present production example. As shown in FIG. 4, the transparent silica glass obtained in Production Example 3 contained fluorine sufficiently. A transmission loss (measured at 1550 nm) of an optical fiber obtained by drawing the transparent silica glass as a preform was 0.163 dB/km.

### (Production Example 4)

A fluorine-containing silica glass was produced under the conditions shown in Table 1. A relative refractive index difference of a transparent silica glass produced in Production Example 4 is shown in FIG. 5. A solid line portion in FIG. 5 is a portion produced in the present production example. As shown in FIG. 5, the transparent silica glass obtained in Production Example 4 contained fluorine sufficiently. A transmission loss (measured at 1550 nm) of an optical fiber obtained by drawing the transparent silica glass as a preform was 0.162 dB/km.

### (Production Example 5)

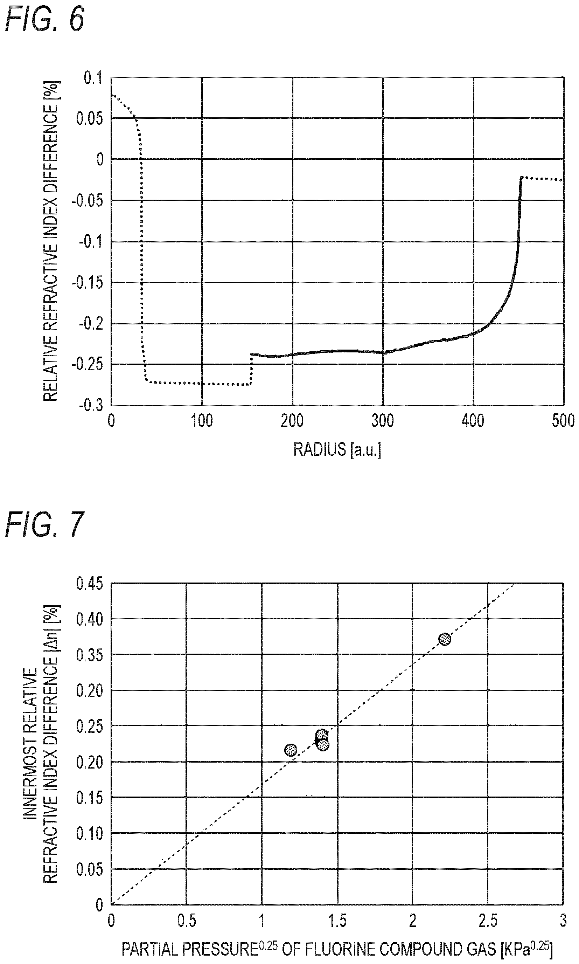

A fluorine-containing silica glass was produced under the conditions shown in Table 1. A relative refractive index difference of a transparent silica glass produced in Production Example 5 is shown in FIG. 6. A solid line portion in FIG. 6 is a portion produced in the present production example. As shown in FIG. 6, the transparent silica glass obtained in Production Example 5 contained fluorine sufficiently. A transmission loss (measured at 1550 nm) of an optical fiber obtained by drawing the transparent silica glass as a preform was 0.161 dB/km.

**[Table 1]**

| | | Production Example 1 | Production Example 2 | Production Example 3 | Production Example 4 | Production Example 5 |
|---|---|---|---|---|---|---|
| Degassing step | Minimum temperature [°C] | 1100 | 1100 | 1100 | 1050 | 1100 |
| | Maximum temperature [°C] | 1100 | 1100 | 1100 | 1150 | 1100 |
| | Heating time at maximum temperature [minutes] | 150 | 150 | 150 | 90 | 150 |
| | Final ultimate pressure [Pa] | 50 | 50 | 50 | 50 | 50 |
| | Inert gas | None | None | None | N₂ | None |
| Supply step | Fluorine compound gas | CF₄ | CF₄ | SiF₄ | CF₄ | CF₄ |
| | Partial pressure of fluorine compound gas [KPa] | 24 | 4 | 4 | 2 | 4 |
| | Inert gas | None | None | None | N₂ | None |
| | Concentration of fluorine compound gas [%] | 100 | 100 | 100 | 16 | 100 |
| Fluorine adding step | Fluorine compound gas | CF₄ | CF₄ | SiF₄ | CF₄ | CF₄ |
| | Inert gas | None | None | None | N₂ | None |
| Confinement and heat treatment step | Temperature [°C] | Not performed | Not performed | Not performed | Not performed | 1220 |
| Transparent vitrification step | Final ultimate pressure [Pa] | 50 | 50 | 50 | 50 | 50 |
| Transmission loss of optical fiber [dB/km] | | 0.168 | 0.162 | 0.163 | 0.162 | 0.161 |

FIG. 7 shows a relationship between a partial pressure (0.25 power) of the fluorine compound gas in the supply step and a relative refractive index difference of an obtained fluorine-containing silica glass. An absolute value |Δn| of an innermost relative refractive index difference, which is a vertical axis in FIG. 7, is a minimum value of an absolute value of the relative refractive index difference in a range of 5% to 20% from an inner side when total thicknesses of the fluorine-containing glass portions (solid line portions in FIGS. 2 to 6) produced under the conditions of Production Examples are 100%. As can be seen from FIG. 7, the larger the partial pressure of the fluorine compound gas in the supply step, the larger the absolute value of the innermost relative refractive index difference.

Although the present invention has been described in detail with reference to specific embodiments, it is apparent to those skilled in the art that various changes and modifications can be made without departing from the spirit and scope of the present invention. Further, the numbers, positions, shapes, and the like of the constituent members described above are not limited to those in the above embodiment, and can be changed to those suitable for implementing the present invention.

### REFERENCE SIGNS LIST

1: production apparatus
10: container
11: front chamber
12: rod
13: gate valve
14: furnace body
15: heater
16: heat insulating material
20: furnace core tube
31: fluorine compound gas supply portion
32, 33: inert gas supply portion
34, 35: supply pipe
41, 42, 44: exhaust pipe
43, 45: pump
M: porous silica glass body

## Claims

1. A method for producing a fluorine-containing silica glass comprising:
a degasification step of degassing an inside of a furnace core tube under reduced pressure while heating the inside of the furnace core tube, after inserting a porous silica glass body into the furnace core tube provided in an airtight container;
a supply step of supplying a fluorine compound gas into the furnace core tube under reduced pressure;
a fluorine addition step of heat-treating the porous silica glass body under reduced pressure while supplying the fluorine compound gas into the furnace core tube and discharging a gas from the furnace core tube; and
a transparent vitrification step of heat-treating in a reduced pressure at a temperature higher than temperatures in the degasification step and the fluorine addition step.

2. The production method according to claim 1, wherein
the degasification step is performed at the temperature of 600°C or more and 1200°C or less.

3. The production method according to claim 1 or 2, wherein
a maximum temperature in the degasification step is 900°C or more and 1200°C or less.

4. The production method according to claim 3, wherein
the degasification step has a heating time of at least 30 minutes at the maximum temperature.

5. The production method according to any one of claims 1 to 4, wherein
an ultimate pressure at an end of the degasification step is less than 500 Pascals.

6. The production method according to any one of claims 1 to 5, wherein
in the degasification step, an inert gas is supplied into the furnace core tube.

7. The production method according to any one of claims 1 to 6, wherein
the fluorine compound gas used in the supply step and the fluorine addition step is a compound gas of a group 14 element and fluorine, and does not contain a chlorine atom or a hydrogen atom.

8. The production method according to any one of claims 1 to 7, wherein
in the supply step and the fluorine addition step, the fluorine compound gas is diluted with an inert gas at a concentration of 1% or more and less than 100% and supplied, or the fluorine compound gas is supplied at a concentration of 100%.

9. The production method according to any one of claims 1 to 8, wherein
in the supply step, the heat-treating is performed after stopping exhaustion of the furnace core tube.

10. The production method according to any one of claims 1 to 9, wherein
in the fluorine addition step, at least one of an amount of the supplied gas and an amount of the exhausted gas is controlled such that a pressure in the furnace core tube is constant.

11. The production method according to any one of claims 1 to 10, further comprising:
a confinement and heat-treating step of heat-treating in a state in which the supply to the furnace core tube and the discharge from the furnace core tube is stopped and the fluorine compound gas is confined in the furnace core tube, after the fluorine addition step.

12. The production method according to claim 11, wherein
a maximum temperature in the confinement and heat-treating step is 1150°C or more and 1250°C or less.

13. The production method according to any one of claims 1 to 12, further comprising:
an evacuating step of reducing a pressure while supplying an inert gas into the furnace core tube before the transparent vitrification step.

14. The production method according to any one of claims 1 to 13, wherein
an ultimate pressure is less than 500 Pascals at an end of the transparent vitrification step.
